# EUROPEAN PATENT APPLICATION

(11) **EP 4 589 626 A1**
(43) Date of publication of application: **23.07.2025**
(21) Application number: 24163808.9
(22) Date of filing: 15.03.2024
(51) Int. Cl.: H01H 71/00, H01H 1/20

(54) **ELECTRICAL DEVICE AND ELECTRICAL SYSTEM**

(30) Priority: 16.01.2024 CN 202420107477 U
(71) Applicant: Schneider Electric (China) Co., Ltd., Beijing 100102 (CN)
(72) Inventor: TIAN, Simon, Shanghai, 201203 (CN); GE, Yuanyuan, Shanghai, 201203 (CN); HAN, Zhigang, Shanghai, 201203 (CN); ZHAO, Haijun, Shanghai, 201203 (CN); SHI, Ying, Shanghai, 201203 (CN)
(74) Representative: Manitz Finsterwald Patent- und Rechtsanwaltspartnerschaft mbB

(57) **Abstract**

The present disclosure provides an electrical device, including: a first sub-mechanism, capable of switching between an electrically conductive state and an electrically isolated state; a second sub-mechanism, capable of switching between an electrically conductive state and an electrically isolated state; when one of the first sub-mechanism and the second sub-mechanism is electrically isolated, the other of the first sub-mechanism and the second sub-mechanism is electrically conductive.

## Description

### TECHNICAL FIELD

The present disclosure relates to the electrical field, in particular to an electrical device and an electrical system including the electrical device.

### BACKGROUND

In the traditional AC distribution network, TN system is widely used for its safety, good maintenance and maintainability. The characteristic of the TN system lies in that, in the whole system, the neutral line and the ground line are only connected at a single point at the source side, and the equipment grounding is directly connected to the ground line, which is also called protective connection to zero.

Different from the traditional distribution network, there are a large number of distributed power sources or prosumers in the microgrid, the prosumers can realize bidirectional transformation, sometimes acting as sources and sometimes as loads, such as V2G charging piles.

The existence of multiple sources in the microgrid will bring the complexity of distribution system. When the main circuit fails or the main circuit is maintained, the circuit breaker connecting the main circuit and the sub-grid may be disconnected, so that the sub-grid can operate as an isolated island. If the sub-grid can't perform grounding reconfiguration, the sub-grid will work under the IT grounding system, which will bring about security problems such as unrecognizable leakage.

### SUMMARY

The purpose of the present disclosure is to at least solve the shortcomings existing in the prior art. The present disclosure provides an electrical device, including: a first sub-mechanism switchable between an electrically conductive state and an electrically isolated state and a second sub-mechanism switchable between an electrically conductive state and an electrically isolated state. When one of the first sub-mechanism and the second sub-mechanism is electrically isolated, the other of the first sub-mechanism and the second sub-mechanism is electrically conductive, and the first sub-mechanism and the second sub-mechanism are configured to be connected to a neutral line.

According to some embodiments of the present disclosure, the first sub-mechanism includes a first stationary part and a first movable part, which is movable relative to the first stationary part in a first direction and in a second direction opposite to the first direction to realize contact and separation between the first stationary part and the first movable part, wherein the movement in the first direction allows the first movable part to move towards the first stationary part, and the first sub-mechanism is electrically conductive when the first stationary part contacts with the first movable part; the second sub-mechanism includes a second stationary part and a second movable part which is movable relative to the second stationary part in the first direction and in the second direction to realize contact and separation of the second stationary part and the second movable part, wherein the movement in the first direction allows the second movable part to move away from the second stationary part, and the second sub-mechanism is electrically conductive when the second stationary part contacts with the second movable part; a linkage sub-mechanism couples the first movable part and the second movable part into motion synchronization.

According to some embodiments of the present disclosure, further including: a third sub-mechanism, including a third stationary part and a third movable part, the third movable part is movable relative to the third stationary part in the first direction and in the second direction to realize contact and separation between the third stationary part and the third movable part, wherein the movement in the first direction allows the third movable part to move towards the third stationary part, and the third sub-mechanism is electrically conductive when the third stationary part contacts with the third movable part, the linkage sub-mechanism couples the first movable part, the second movable part and the third movable part into motion synchronization.

According to some embodiments of the present disclosure, the movement in the first direction and the movement in the second direction are pivotal movements, the first movable part is centrally symmetric about a pivot axis of the first movable part and includes two movable contacts, and two first stationary parts are provided and each includes one of two stationary contacts symmetrically arranged about the pivot axis of the first movable part.

According to some embodiments of the present disclosure, the first sub-mechanism and the third sub-mechanism have same structure, and the first sub-mechanism in electrically conductive state and the second sub-mechanism in electrically conductive state are mirror symmetrical.

According to some embodiments of the present disclosure, the first sub-mechanism, the third sub-mechanism and the second sub-mechanism are respectively installed in different breaking units, wherein the breaking unit including the second sub-mechanism is detachable relative to other parts of the electrical device.

According to some embodiments of the present disclosure, the first sub-mechanism and the second sub-mechanism are configured to be connected to the neutral line, and the third sub-mechanism is configured to be connected to a live line.

According to some embodiments of the present disclosure, the electrical device is a circuit breaker.

According to some embodiments of the present disclosure, the electrical device is a solid-state circuit breaker.

The present disclosure further provides an electrical system, including: a live line, a neutral line and the electrical device according to any one of the above embodiments, the first sub-mechanism and the second sub-mechanism are connected to the neutral line and the third sub-mechanism is connected to the live line.

According to some embodiments of the present disclosure, further including a main circuit and a sub-grid, the main circuit and the sub-grid are connected through the electrical device, and the main circuit includes the live line and the neutral line.

When the sub-grid is electrically conductive to the neutral line and the live line through the first sub-mechanism and the third sub-mechanism respectively, the main circuit supplies power to the sub-grid.

### BRIEF DESCRIPTION OF DRAWINGS

Fig. 1 shows a schematic plan view of the wiring of three breaking units of an electrical device according to the present disclosure;
Figs. 2a and 2b show schematic diagrams of a first sub-mechanism and a linkage sub-mechanism of the electrical device according to Fig. 1, in which Fig. 2a shows an electrically conductive state of the first sub-mechanism and Fig. 2b shows an electrically isolated state of the first sub-mechanism;
Figs. 3a and 3b show schematic diagrams of a second sub-mechanism and a linkage sub-mechanism of the electrical device according to Fig. 1, in which Fig. 3a shows an electrically conductive state of the second sub-mechanism, and Fig. 3b shows an electrically isolated state of the second sub-mechanism;
Fig. 4 shows a schematic perspective view of the electrical device according to Fig. 1;
Fig. 5 shows a schematic structural diagram of an electrical system including an electrical device according to the present disclosure.

### DETAILED DESCRIPTION

In order to make the purpose, scheme and advantages of the technical scheme of the present disclosure more clear, the technical scheme of the embodiment of the present disclosure will be described clearly and completely with the accompanying drawings of specific embodiments of the present disclosure. Unless otherwise specified, the terms used herein have the ordinary meaning in the art. Like reference numerals in the drawings represent like parts.

In the description of the present disclosure, it should be noted that unless otherwise specified and limited, the terms "installation", "connecting" and "connection" should be broadly understood, for example, they can be fixed connection, detachable connection or integrated connection; they can also be a mechanical connection or an electrical connection; can be directly connected, can also be indirectly connected through an intermediate medium, and can be connected inside two elements. For those skilled in the art, the specific meanings of the above terms in the present disclosure can be understood in specific situations.

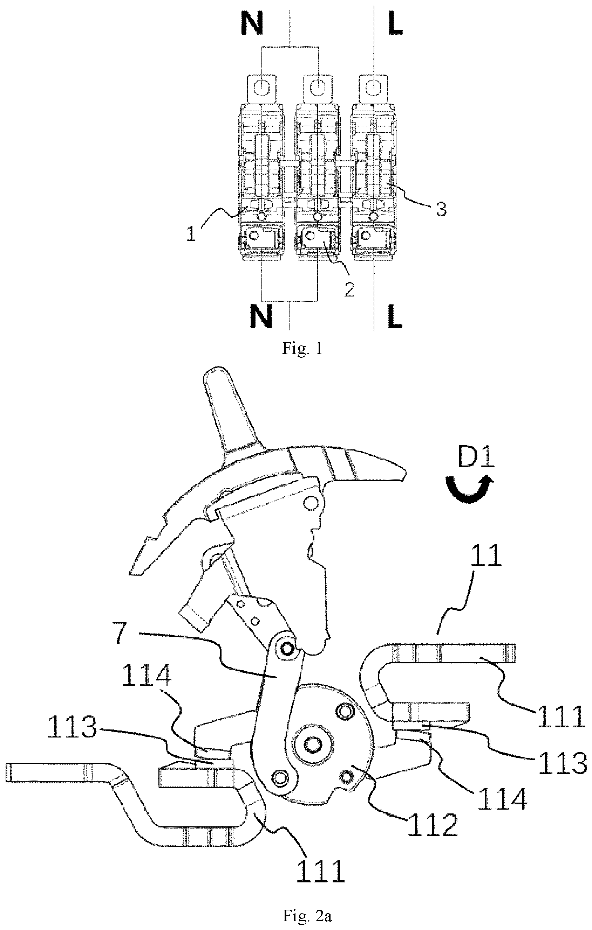

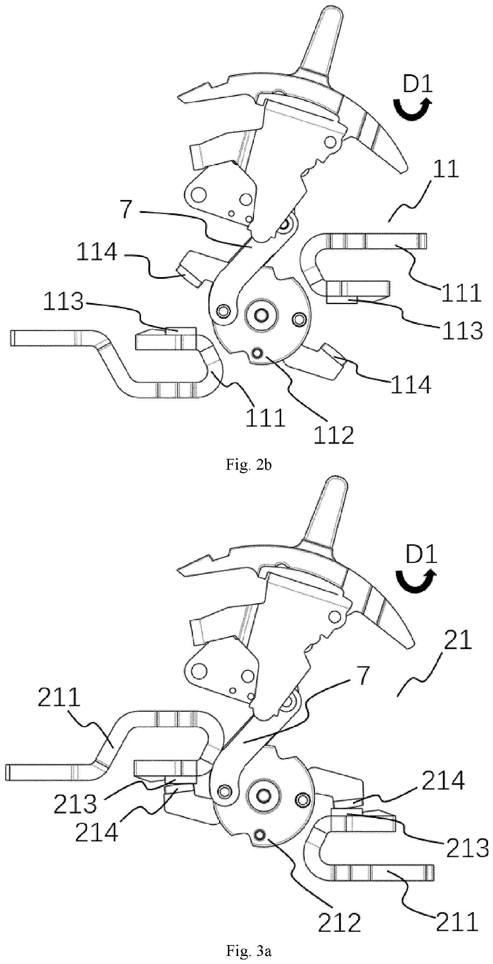

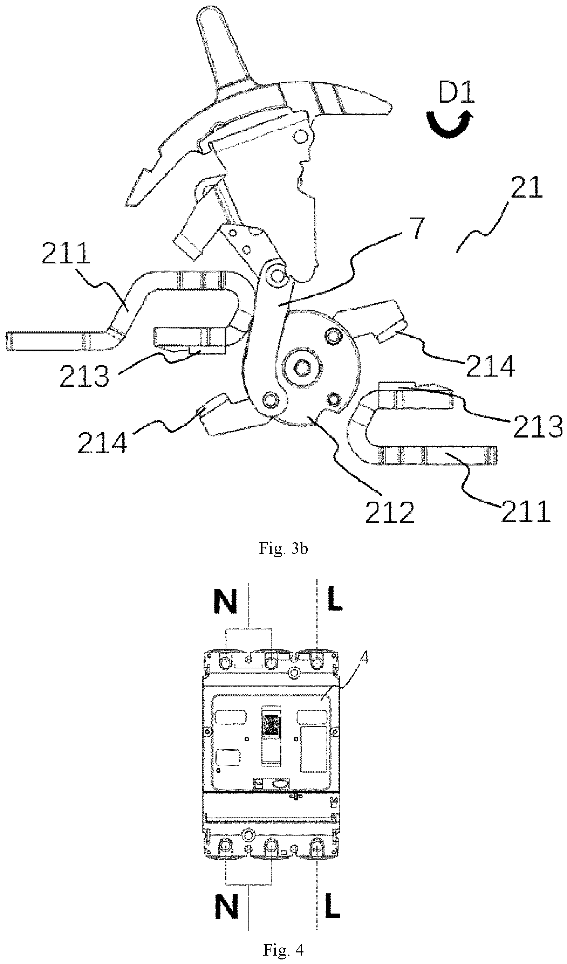

For convenience of explanation, in the present disclosure, the first direction D1 is designated as a direction in which the first movable part in the first sub-mechanism moves toward the first stationary part, as exemplarily shown by arrows in Figs. 2a, 2b, 3a and 3b, and the second direction D2 is opposite to the first direction D1. The arrows in Figs. 2a, 2b, 3a and 3b are only examples, and the first direction D1 may be clockwise or counterclockwise, or even a linear motion direction.

The electrical device according to the present disclosure can include three breaking units, as illustrated by Fig. 1, in which each breaking unit can include a corresponding sub-mechanism. Specifically, the first breaking unit 1 is provided with a first sub-mechanism 11 (as illustrated by Figs. 2a and 2b), the second breaking unit 2 is provided with a second sub-mechanism 21 (as illustrated by Figs. 3a and 3b), and the third breaking unit 3 is provided with a third sub-mechanism (not shown in the Figures). In addition, the third breaking unit 3 can be omitted according to the reference situation and applicable environment, or other breaking units can be added according to other application situation. Therefore, the electrical device according to the present disclosure can apply the housing and assembly arrangement of the existing breaking unit, and the size specification of the electrical device is still a standard specification, which meets the market demand.

Figs. 2a and 2b show schematic diagrams of the first sub-mechanism 11 and the linkage sub-mechanism 7 of the electrical device according to Fig. 1, in which Fig. 2a shows an electrically conductive state of the first sub-mechanism 11 and Fig. 2b shows an electrically isolated state of the first sub-mechanism 11. As illustrated by Figs. 2a and 2b, the first sub-mechanism 11 includes a first stationary part 111 and a first movable part 112. The first movable part 112 is movable relative to the first stationary part 111 in a first direction D1. The movement in the first direction D1 can be, for example, a linear movement, or a pivotal movement as shown by the arrows in Figs. 2a and 2b and can be, for example, a counterclockwise direction.

Therefore, in the case that the movement in the first direction D1 and the movement in the second direction D2 are pivotal movements, as illustrated by Fig. 2a, the first movable part 112 is centrally symmetric about its own pivot axis, and may include one first movable contact 114 at both ends, respectively. Corresponding to the first movable contact 114, the number of the first stationary parts 111 may be two, and each of the first stationary parts 111 may include one of two first stationary contacts 113 symmetrically arranged about the pivot axis of the first movable part 112. Thus, two pairs of the first movable contact 114 and the first stationary contact 113 can be switched on and off synchronously.

The movement in the first direction D1 allows the first movable part 112 to move towards the first stationary part 111. Especially, when the first stationary part 111 contacts with the first movable part 112, the first sub-mechanism 11 is electrically conductive, as illustrated by Fig. 2a. On the contrary, the movement in the second direction D2, which is opposite to the first direction D1, allows the first movable part 112 to move away from the first stationary part 111, and the first sub-mechanism 11 can be changed from an electrically conductive state (as illustrated by Fig. 2a) to an electrically isolated state (as illustrated by Fig. 2b).

Figs. 3a and 3b show schematic diagrams of the second sub-mechanism 21 and the linkage sub-mechanism 7 of the electrical device according to Fig. 1, in which Fig. 3a shows an electrically conductive state of the second sub-mechanism 11 and Fig. 3b shows an electrically isolated state of the second sub-mechanism 21. As illustrated by Figs. 3a and 3b, the second sub-mechanism 21 includes a second stationary part 211 and a second movable part 112, and the second movable part 212 is movable relative to the second stationary part 211 in the first direction D1. However, contrary to the first sub-mechanism 11, the movement in the first direction D1 allows the second movable part 212 to move away from the second stationary member 211, and thus the second sub-mechanism 21 can be changed from an electrically conductive state (as illustrated by Fig. 3a) to an electrically isolated state (as illustrated by Fig. 3b). On the contrary, the movement in the second direction D2 allows the second movable part 212 to move towards the second stationary part 211. In particular, when the second stationary part 211 contacts with the second movable part 212, the second sub-mechanism 21 is electrically conductive, as illustrated by Fig. 3a.

Similar to the first sub-mechanism 11, the second sub-mechanism 21 can also include a rotatable second movable part 212 and two second stationary parts 211. The second movable part 212 includes two movable contacts 214 and the second stationary part includes two stationary contacts 213. The second movable part 212 is symmetrical about its own pivot axis, and the two stationary contacts 213 are symmetrical about the pivot axis of the second movable part 212. Thus, two pairs of the second movable contact 214 and the second stationary contact 213 can be switched on and off synchronously.

In addition, the first sub-mechanism 11 in electrically conductive state and the second sub-mechanism 21 in electrically conductive state are mirror-symmetrical, as illustrated by, for example, Figs. 2a and 3a, that is, each of the two first stationary parts 111 includes the same structure as one of the two second stationary parts 211, but their relative arrangement positions are different, and the first movable part 112 and the second movable part 212 are mirror-symmetrical to each other. Therefore, different arrangements of the first stationary part 111 and the second stationary part 211 can be realized by changing the arrangement positions of the same parts, and the manufacturing cost can be reduced. In particular, the first movable part 112 is symmetrical about a plane perpendicular to its own pivot axis, so that the first movable part 112 can be the same part as the second movable part 212, further reducing the cost.

Furthermore, the linkage sub-mechanism 7 couples the first movable part 112 and the second movable part 212 into motion synchronization, that is, the first movable part 112 and the second movable part 212 simultaneously perform the movements in the first direction D1 or simultaneously perform the movements in the second direction D2. Thus, when the first movable part 112 is separated from the first stationary part 111, the second movable part 212 contacts with the second stationary part 211; when the second movable part 212 moves away from the second stationary part 211, the first movable part 112 moves into contact with the first stationary part 111. Thus, when one of the first sub-mechanism 11 and the second sub-mechanism 21 is electrically isolated, the other of the first sub-mechanism 11 and the second sub-mechanism 21 is electrically conductive.

As illustrated by Fig. 1, the first sub-mechanism 11 and the second sub-mechanism 21 according to the present disclosure are configured to be connected to a neutral line N, so that power can be supplied through the electrical conduction of the first sub-mechanism 11; when the power supply is disconnected, that is, when the first sub-mechanism 11 is electrically isolated, the second sub-mechanism 21 is electrically conductive, so that the electrical device is connected to the neutral line through the second sub-mechanism 21, and grounding reconfiguration is realized. Therefore, the grounding reconfiguration can be realized, and the grounding reconfiguration can be carried out at any position of the line, thus increasing the flexibility of line setting; the device can be interlocked with the main contact, especially mechanically interlocked with the main contact, with high reliability, further ensuring the execution of grounding reconfiguration; the grounding reconfiguration time of the mechanism can be less than 10ms, which has little influence on the equipment at the outlet side; the second sub-mechanism can be further realized by means of accessories, and it can be decided whether to select grounding reconfiguration accessories according to the position of the circuit breaker in the line.

Furthermore, similar to the first sub-mechanism, the third sub-mechanism (not shown) includes a third stationary part and a third movable part. The third movable part is movable relative to the third stationary part in the first direction and in the second direction to realize the contact and separation between the third stationary part and the third movable part. The movement in the first direction allows the third movable part to move towards the third stationary part. When the third stationary part contacts with the third movable part, the third sub-mechanism is electrically conductive; when the third stationary part and the third movable part are separated, the third sub-mechanism is electrically isolated.

The linkage sub-mechanism 7 further couples the first movable part 11, the second movable part 21 and the third movable part into motion synchronization, so that the first movable part 112, the second movable part 212 and the third movable part simultaneously perform the movements in the first direction D1 or simultaneously perform the movements in the second direction D2. Thus, the third sub-mechanism can be configured to be connected to the live line L to realize the on-off operation of the live line L.

In particular, the first sub-mechanism 11 and the third sub-mechanism have the same structure, so that the live line L and the neutral line N can be switched on and off more synchronously, and the manufacturing and assembly are convenient, and the cost is reduced.

Furthermore, the electrical device according to the present disclosure is a circuit breaker, such as a solid-state circuit breaker, and the function of grounding reconfiguration is added to the circuit breaker, and at the same time, the device can be interlocked, especially mechanically interlocked, with the main contact, so that the reliability is improved and the execution of grounding reconfiguration is further ensured. In addition, the electrical device can also be other electrical devices such as contactors. In particular, for a solid state circuit breaker, three breaking units 1, 2 and 3 and/or three sub-mechanisms 11, 21 and 31 according to the present disclosure can also be included, and the grounding reconfiguration function does not affect the realization of the breaking function of the solid state circuit breaker, that is, the solid state circuit breaker can also include other elements, for example, thyristor devices, besides the three breaking units 1, 2 and 3 and/or three sub-mechanisms 11, 21 and 31 according to the present disclosure, so as to realize the original function of controlling the on-off of the circuit.

In particular, the second breaking unit 2 including the second sub-mechanism 21 is detachable relative to the rest parts of the electrical device 4, that is, the second breaking unit 2 can be added to the existing device in the form of an accessory according to the specific application scenario, so as to form the new electrical device 4 according to the present disclosure to increase the corresponding grounding reconfiguration function. For example, for a circuit breaker with two poles (including the first breaking unit 1 and the third breaking unit 3), the second breaking unit 2 according to the present disclosure is added, and the second breaking unit 2 and the first breaking unit 1 are connected so that their electrically conductive state and electrical isolation state are opposite, so as to form an electrical device 4 with grounding reconfiguration function.

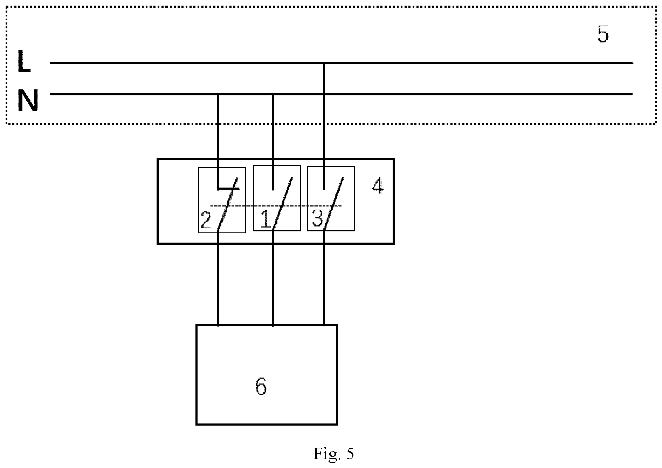

In addition, an electrical system according to the present disclosure includes the electrical device according to the present disclosure, and further includes a live line Land a neutral line N, the first sub-mechanism 11 and the second sub-mechanism 21 are connected to the neutral line N, and the third sub-mechanism is connected to the live line L. In addition, as illustrated by Fig. 5, the electrical system according to the present disclosure also includes a main circuit 5 (dotted box) and a sub-grid 6 (solid box), and the main circuit 5 includes a live line L and a neutral line N. The dotted line in Fig. 5 connects the first breaking unit 1, the second breaking unit 2 and the third breaking unit 3, which means that the on-off states of the first breaking unit 1 and the third breaking unit 3 are synchronous, while the on-off states of the first breaking unit 1 and the second breaking unit 2 are opposite. The sub-grid 6 is connected to the main circuit 5 through an electrical device according to the present disclosure, and the neutral line N and the live line L in the main circuit 5 can supply power to the sub-grid through the first sub-mechanism 11 and the third sub-mechanism in the electrically conductive states. When the power supply between the main circuit 5 and the sub-grid 6 is disconnected, that is, when the first sub-mechanism 11 and the third sub-mechanism are electrically isolated, the second sub-mechanism 21 is electrically conductive, so that the sub-grid 6 is electrically conductive to the neutral line through the second sub-mechanism 21, as illustrated by Fig. 5, thereby realizing the grounding reconfiguration, and at this time, the sub-grid 6 can supply power by itself to complete its specific function.

It should be understood that the above description is intended to be illustrative rather than limiting. For example, the above embodiments (and/or aspects thereof) may be used in combination with each other. In addition, many modifications may be made to adapt a particular situation or material to the teachings of the present disclosure without departing from its scope. The functions or performances of various elements or modules described herein are only for illustration and are in no way restrictive, but only exemplary embodiments. Many other embodiments and modifications within the spirit and scope of the claims will be apparent to those skilled in the art after reading the above description. Therefore, the scope of the present disclosure should be determined with reference to the appended claims, along with the full scope of equivalents to which such claims are entitled.

In the appended claims, the terms "comprising" and "wherein" are used as simple English equivalents of the corresponding terms "including" and "in which". Furthermore, in the following claims, the terms "first", "third" and "second" are only used as labels, and no numerical requirements are intended to be imposed on their objects.

### List of reference numerals:

1-first breaking unit,
11-first sub-mechanism,
111-first stationary part,
112-first movable part,
113-first stationary contact,
114-first movable contact,
2-second breaking unit,
21-second sub-mechanism,
211-second stationary part,
212-second movable part,
213-second stationary contact,
214-second movable contact,
3- third breaking unit,
4-electrical device,
5-main circuit,
6-sub-grid,
7- linkage sub-mechanism
D1-first direction
N-neutral line,
L-live line

## Claims

1. An electrical device, comprising:
a first sub-mechanism, switchable between an electrically conductive state and an electrically isolated state,
a second sub-mechanism, switchable between an electrically conductive state and an electrically isolated state,
wherein when one of the first sub-mechanism and the second sub-mechanism is electrically isolated, the other of the first sub-mechanism and the second sub-mechanism is electrically conductive, and
the first sub-mechanism and the second sub-mechanism are configured to be connected to a neutral line.

2. The electrical device according to claim 1, wherein,
the first sub-mechanism comprises a first stationary part and a first movable part which is movable relative to the first stationary part in a first direction and in a second direction opposite to the first direction to realize contact and separation between the first stationary part and the first movable part, wherein the movement in the first direction allows the first movable part to move towards the first stationary part, and the first sub-mechanism is electrically conductive when the first stationary part contacts with the first movable part;
the second sub-mechanism comprises a second stationary part and a second movable part which is movable relative to the second stationary part in the first direction and in the second direction to realize contact and separation of the second stationary part and the second movable part, wherein the movement in the first direction allows the second movable part to move away from the second stationary part, and the second sub-mechanism is electrically conductive when the second stationary part contacts with the second movable part;
a linkage sub-mechanism couples the first movable part and the second movable part into motion synchronization.

3. The electrical device according to claim 2, further comprising:
a third sub-mechanism, comprising a third stationary part and a third movable part, the third movable part is movable relative to the third stationary part in the first direction and in the second direction to realize contact and separation between the third stationary part and the third movable part, wherein the movement in the first direction allows the third movable part to move towards the third stationary part, and the third sub-mechanism is electrically conductive when the third stationary part contacts with the third movable part,
wherein the linkage sub-mechanism couples the first movable part, the second movable part and the third movable part into motion synchronization.

4. The electrical device according to claim 3, wherein,
the movement in the first direction and the movement in the second direction are pivotal movements,
the first movable part is centrally symmetric about a pivot axis of the first movable part and comprises two movable contacts, and two first stationary parts are provided and each comprises one of two stationary contacts symmetrically arranged about the pivot axis of the first movable part.

5. The electrical device according to claim 4, wherein,
the first sub-mechanism and the third sub-mechanism have same structure, and the first sub-mechanism in electrically conductive state and the second sub-mechanism in electrically conductive state are mirror symmetrical.

6. The electrical device according to claim 3, wherein,
the first sub-mechanism, the third sub-mechanism and the second sub-mechanism are respectively installed in different breaking units, wherein the breaking unit comprising the second sub-mechanism is detachable relative to other parts of the electrical device.

7. The electrical device according to any one of claims 3-6, wherein,
the first sub-mechanism and the second sub-mechanism are configured to be connected to the neutral line, and the third sub-mechanism is configured to be connected to a live line.

8. The electrical device according to any one of claims 1-6, wherein, the electrical device is a circuit breaker.

9. The electrical device according to claim 8, wherein, the electrical device is a solid-state circuit breaker.

10. An electrical system, comprising: a live line, a neutral line and the electrical device according to any one of claims 1-9, wherein the first sub-mechanism and the second sub-mechanism are connected to the neutral line and the third sub-mechanism is connected to the live line.

11. The electrical system according to claim 10, further comprising a main circuit and a sub-grid, wherein the main circuit and the sub-grid are connected through the electrical device, and the main circuit comprises the live line and the neutral line,
wherein when the sub-grid is electrically conductive to the neutral line and the live line through the first sub-mechanism and the third sub-mechanism respectively, the main circuit supplies power to the sub-grid.
